# EUROPEAN PATENT SPECIFICATION

(11) **EP 1 116 754 B1**
(45) Date of publication and mention of the grant of the patent: **02.03.2005**
(21) Application number: 00311740.5
(22) Date of filing: 28.12.2000
(51) Int. Cl.: C09D 11/00, H01B 1/22

(54) **Pressure-sensitive conductive ink composition**
Druckempfindliche, leitfähige Tintenzusammensetzung
Encre conductrice sensible à la pression

(30) Priority: 28.12.1999 JP 37333099
(43) Date of publication of application: 18.07.2001
(60) Divisional application: 04021112.0
(73) Proprietor: Nitta Corporation, Osaka-shi, Osaka 556-0022 (JP)
(72) Inventor: Ueda, Tsutomu, c/o Nitta Corporation, Yamatokouriyama, Nara (JP); Ooue, Toshikazu, c/o Nitta Corporation, Yamatokouriyama, Nara (JP)
(74) Representative: Harrison, David Christopher

(56) References cited:
- WO-A-99/45077
- US-A- 4 595 604
- US-A- 4 765 930
- US-A- 5 089 173

## Description

The present invention relates to a pressure-sensitive conductive ink composition which may be used for pressure-sensitive sensors and the like which measure, for example, pressure and/or its distribution.

A conventional pressure-sensitive conductive ink composition, employing an ink binder in which a thermoplastic resin is dissolved by heating in a high-boiling solvent, has been used for pressure-sensitive sensors and the like.

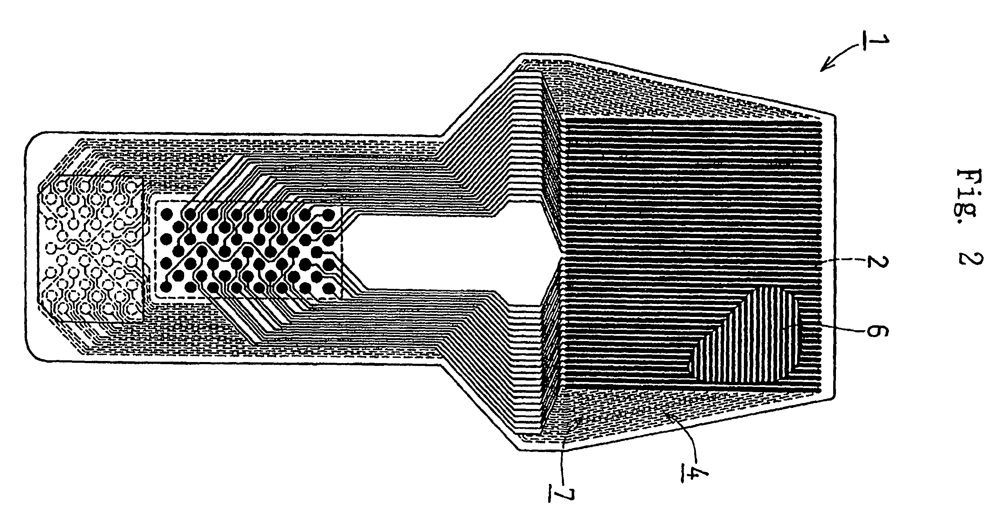

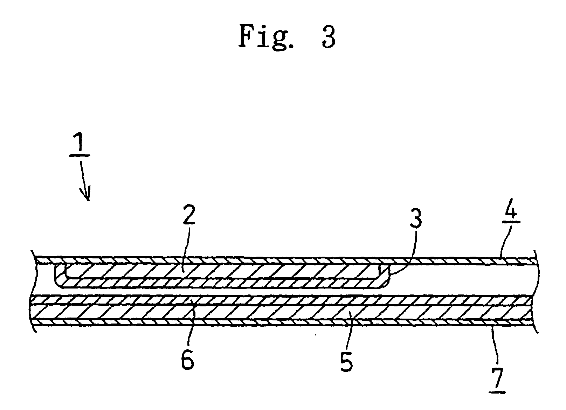

One example of pressure-sensitive sensor 1 is used in a form shown in Figs. 2 and 3. The pressure-sensitive sensor 1 includes, at one side, a sheet substrate 4 on which line electrodes 2 are printed at predetermined intervals and pressure-sensitive conductive ink 3 is applied to surround the line electrodes 2. At the other side, a sheet substrate 7 has row electrodes 5 printed perpendicular to the line electrodes 2. A pressure-sensitive ink 6 is applied to surround the row electrodes 5.
The surfaces of the respective pressure-sensitive conductive ink layers are opposed to each other.

In the conventional pressure-sensitive conductive ink compositions, however, there is the problem with maintaining the desired pressure sensitive characteristics in a high-temperature atmosphere.

It is hence an object of the present invention to provide a pressure-sensitive conductive ink composition capable of maintaining pressure-sensitive characteristics in a high temperature atmosphere.

To achieve the above object, the present invention takes the following technical measures.
(1) The pressure-sensitive conductive ink composition of the present invention includes a thermoplastic resin, a conductive filler, and a curing agent partially crosslinking the thermoplastic resin. The resin is a polyhydroxy ether as set out in section (4) below.
   In the present invention, the thermoplastic resin undergoes a partial crosslinking reaction by the curing agent to be thermoset, so that the glass transition point can be improved.
(2) The thermoplastic resin is a polyhydroxy ether. This provides an ether linkage instead of an ester linkage which are inferior in hydrolyzability, thereby resulting in an improved humidity resistance.
(3) The pressure-sensitive conductive ink composition of the present invention may also have a non-conductive filler.
(4) The polyhydroxy ether has a structure of the following general formula (as synthesized from tetrabromo-bis-phenol A and epichlorohydrin). 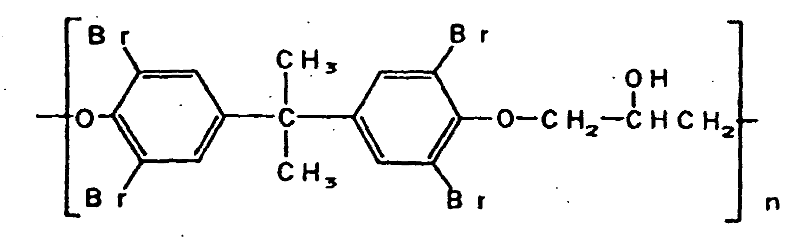
   The range of n is from about 1 to about 500, preferably from about 50 to about 250, even more preferably from about 80 to about 150.
   This structure advantageously improves heat resistance while maintaining the flexibility and imparts a flame retardancy.
(5) The curing agent may be one or more isocyanates selected from the group consisting of TDI (tolylene diisocyanate), IPDI (isophorone diisocyanate), HDI (hexamethylene diisocyanate) and XDI (xylylene diisocyanate). These curing agents advantageously improve heat resistance.
(6) The curing agent may be one or more polyisocyanates selected from the group consisting of biuret-type, adduct-type and isocyanurate-type isocyanates of TDI (tolylene diisocyanate), IPDI (isophorone diisocyanate), HDI (hexamethylene diisocyanate) and XDI (xylylene diisocyanate). These curing agents improve durability and provide easy handling (in regard to toxicity) at the time of manufacturing.
(7) The curing agent may make use of one or more active hydrogen compounds selected from the group consisting of methyl ethyl ketone, ε-caprolactone, ethyl acetoacetate and phenol as a blocking agent. These blocking agents advantageously give a longer pot-life (storage life).
(8) The composition may be blended such that the ratio (NCO/OH) of NCO in the isocyanate curing agent to OH in the polyhydroxy ether may be about 0.2 to 2.0. This ratio enables a desired rate of crosslinking reaction.
(9) The conductive filler may be conductive carbon black with a developed structure having an amount of DBP oil absorption of about 200 to 480 ml/100g. This enables the composition to obtain stable conductivity.
(10) A non-conductive filler which may be used in an embodiment may be superfine silicon dioxide having a primary particle diameter of about 7 to 40 nm. This enhances the dispersibility of carbon black as well as the printability of the composition.
(11) The pressure-sensitive sensor of the present invention employs the pressure-sensitive conductive ink composition as described above.

Practical examples of the present invention will now be described with reference to the accompanying drawings, in which:
Fig. 1 is a graph showing the temperature stability of the pressure-sensitive characteristics of various samples of the pressure-sensitive sensor of the present invention as compared to a comparative example;
Fig. 2 is a front view of the structure of a pressure-sensitive sensor; and
Fig. 3 is an enlarged cross-sectional view of the structure of line electrodes and pressure-sensitive conductive ink applied around the line electrodes in the pressure-sensitive sensor in Fig. 2.

The pressure-sensitive conductive ink composition of the preferred mode for carrying out the present invention includes a thermoplastic resin and a conductive filler.
A curing agent capable of partial crosslinking reaction is added to the thermoplastic resin.

### (Example 1)

49.0 parts by weight of solvent (butyl cellosolve acetate) was added to 21.1 parts by weight of phenoxy resin (Phenototo YPB43 from Toto Kasei Co., Ltd.) having the structure of the general formula below (n is as previously defined), 2.8 parts by weight of carbon black (Furnace Black 3950B from Lion Corporation) and 4.3 parts by weight of silicon dioxide particles (Aerosil R812 from Nippon Aerosil Co., Ltd.). These materials were preliminarily mixed and then sufficiently kneaded in a roll mill.

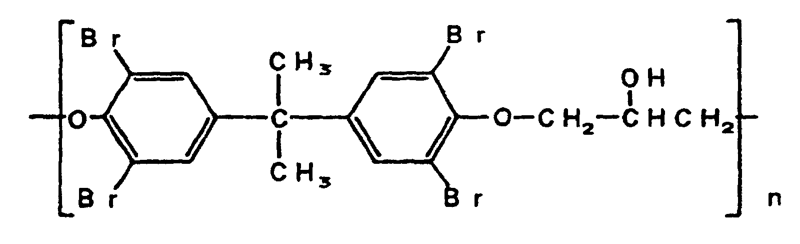

The amount of DBP oil absorbed by the carbon black was 310 ml/100 g, and the primary particle diameter of the silicon dioxide particles was 7 nm.

As a curing agent, 22.9 parts by weight of block-type polyisocyanate (Duranate MF-K60X from Asahi Chemical Industry Co., Ltd.) was added to the kneaded material obtained above, and sufficiently stirred with a stirrer.

The resultant kneaded material was applied as print on a polyimide film by a screen printer, preliminarily cured in an oven at 100°C for 4 minutes and further cured firmly at 145°C for 4 minutes to prepare a pressure-sensitive sensor sample.

### (Comparative Example)

1.4 parts by weight of the same carbon black as in Example 1 and 5.6 parts by weight of the same silicon dioxide particles as in Example 1 were added to 25 parts by weight of polyester resin (Vylon RV200, Toyobo Co., Ltd.), and then further 68 parts by weight of solvent (a mixed solvent of 2-ethoxyethyl acetate and γ-butyrolactone) were added thereto. These materials were preliminarily mixed and then kneaded in a roll mill to prepare a pressure-sensitive sensor sample in the same manner as in the Examples.

### (Evaluation test)

The pressure-sensitive sensor samples were respectively pressurized in a pressuring test machine installed in a thermostatic and humidistatic bath and their pressure-sensitive characteristics were measured. The temperatures were set at 25°C , 45°C , 65°C , 85°C and 95°C , and a pressure of 0.5 kgf/cm² was applied to the samples.

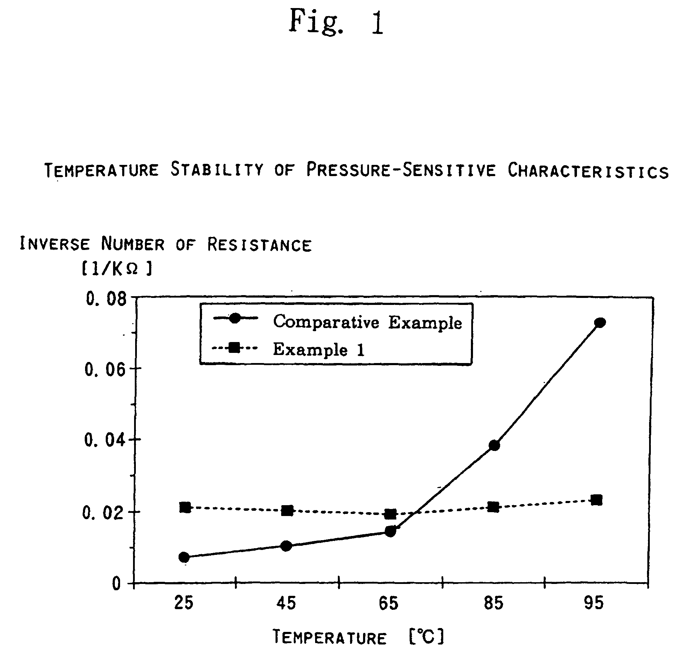

As shown in the graph in Fig. 1, the resistance of the sample in Example 1 hardly changed at temperatures of 25 to 95°C , but the resistance of the sample in the Comparative Example dropped rapidly at a temperature of higher than 65 °C.

The humidity resistances of respective sensor samples were evaluated by measuring the pressure-sensitive characteristics thereof (in an atmosphere at 25°C ) after letting them stand for 1,000 hours at 85°C in 85 % relative humidity. The sample in Example 1 maintained its pressure sensitivity, whereas the sample of the Comparative Example showed a drop in resistance under no pressure and, when pressure was re-applied, there was no longer a change in resistance.

Being constituted as stated above, the present invention improves the glass transition point and provides a pressure-sensitive conductive ink composition which is capable of maintaining pressure-sensitive characteristics even in an atmosphere at high temperatures where the conventional one fails.

## Claims

1. A pressure-sensitive conductive ink composition comprising a thermoplastic resin, a conductive filler and a curing agent partially crosslinking the thermoplastic resin, wherein said thermoplastic resin is a polyhydroxy ether having the formula: 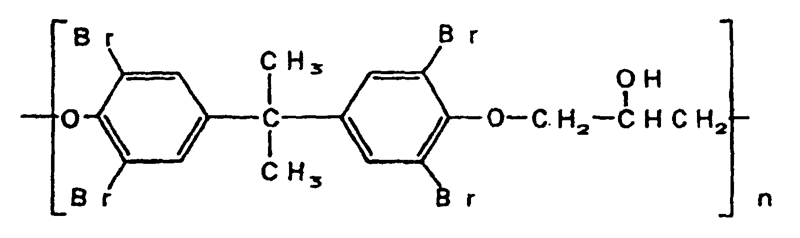 where n is from 1 to about 500.

2. The pressure-sensitive conductive ink composition according to claim 1, wherein said curing agent is one or more isocyanates selected from TDI (tolylene diisocyanate), IPDI (isophorone diisocyanate), HDI (hexamethylene diisocyanate) and XDI (xylylene diisocyanate).

3. The pressure-sensitive conductive ink composition according to claim 1, wherein said curing agent is one or more polyisocyanates selected from biuret-type, adduct-type and isocyanurate-type isocyanates of TDI (tolylene diisocyanate), IPDI (isophorone diisocyanate), HDI (hexamethylene diisocyanate) and XDI (xylylene diisocyanate).

4. The pressure-sensitive conductive ink composition according to claim 3 wherein said curing agent includes a blocking agent which includes one or more active hydrogen compounds selected from methyl ethyl ketone, ε-caprolactone, ethyl acetoacetate and phenol.

5. The pressure-sensitive conductive ink composition according to claim 1, wherein said curing agent is an isocyanate curing agent and the NCO/OH ratio of isocyanate in said curing agent to hydroxy in said polyhydroxy ether is in the range from about 0.2 to about 2.0.

6. The pressure-sensitive conductive ink composition according to any of claims 1-5 wherein said conductive filler is conductive carbon black having a developed structure with a DBP oil absorption from about 200 to about 480 ml/100 g.

7. The pressure-sensitive conductive ink composition according to any one of the preceding claims, which includes a non-conductive filler which is ultrafine silicon dioxide having a primary particle diameter from 7 to 40 nm.

8. A pressure-sensitive sensor comprising said pressure-sensitive conductive ink composition according to any one of claims 1-7.

## Patentansprüche

1. Druckempfindliche leitfähige Druckfarbenzusammensetzung, umfassend ein thermoplastisches Harz, einen leitfähigen Füllstoff und einen Härter, der das thermoplastische Harz teilweise vernetzt, worin das thermoplastische Harz ein Polyhydroxyether mit der folgenden Formel ist: 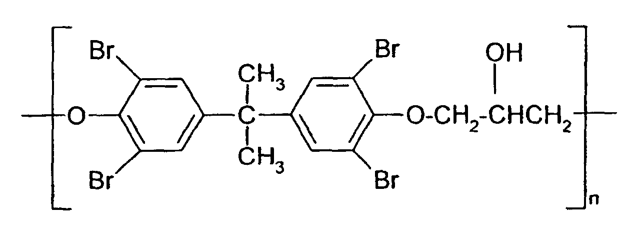 worin n 1 bis etwa 500 ist.

2. Druckempfindliche leitfähige Druckfarbenzusammensetzung nach Anspruch 1, worin der Härter ein oder mehrere aus TDI (Tolylendiisocyanat), IPDI (lsophorondiisocyanat), HDI (Hexamethylendiisocyanat) und XDI (Xylylendiisocyanat) ausgewählte Isocyanate ist.

3. Druckempfindliche leitfähige Druckfarbenzusammensetzung nach Anspruch 1, worin der Härter ein oder mehrere aus Isocyanaten vom Biuret-Typ, Addukt-Typ und Isocyanurat-Typ von TDI (Tolylendiisocyanat), IPDI (Isophorondiisocyanat), HDI (Hexamethylendiisocyanat) und XDI (Xylylendiisocyanat) ausgewählte Polyisocyanate ist.

4. Druckempfindliche leitfähige Druckfarbenzusammensetzung nach Anspruch 3, worin der Härter ein Blockiermittel enthält, das eine oder mehrere aus Methylethylketon, ε-Caprolacton, Ethylacetacetat und Phenol ausgewählte aktive Wasserstoffverbindungen umfasst.

5. Druckempfindliche leitfähige Druckfarbenzusammensetzung nach Anspruch 1, worin der Härter ein Isocyanat-Härter ist und das Verhältnis zwischen NCO/OH des Isocyanats im Härter und Hydroxy im Polyhydroxyether im Bereich von etwa 0,2 bis etwa 2,0 liegt.

6. Druckempfindliche leitfähige Druckfarbenzusammensetzung nach einem der Ansprüche 1 bis 5, worin der leitfähige Füllstoff leitfähiger Ruß mit einer entwickelten Struktur mit einer DBP-Ölabsorption von etwa 200 bis etwa 480 ml/100 g ist.

7. Druckempfindliche leitfähige Druckfarbenzusammensetzung nach einem der vorangegangenen Ansprüche, die einen nichtleitfähigen Füllstoff umfasst, der ultrafeines Siliciumdioxid mit einem Primärteilchendurchmesser von 7 bis 40 nm ist.

8. Druckempfindlicher Sensor, umfassend die druckempfindliche leitfähige Druckfarbenzusammensetzung nach einem der Ansprüche 1 bis 7.

## Revendications

1. Composition d'encre conductrice sensible à la pression comprenant une résine thermoplastique, une charge conductrice et un agent de durcissement réticulant partiellement la résine thermoplastique, où ladite résine thermoplastique est un polyhydroxyéther ayant la formule: 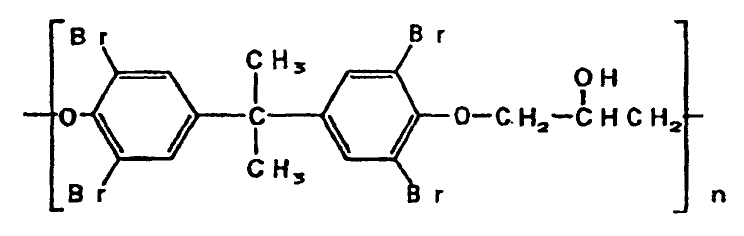 où n est de 1 à environ 500.

2. Composition d'encre conductrice sensible à la pression selon la revendication 1 où ledit agent de durcissement est un ou plusieurs isocyanates sélectionnés parmi TDI (tolylène diisocyanate), IPDI (isophorone diisocyanate), HDI (hexaméthylène diisocyanate) et XDI (xylylène diisocyanate).

3. Composition d'encre conductrice sensible à la pression selon la revendication 1, où ledit agent de durcissement est un ou plusieurs polyisocyanat es sélectionnés parmi des isocyanates du type biuret, du type produit d'addition et du type isocyanurate de TDI (tolylène diisocyanate), IPDI (isophorone diisocyanate), MDI (hexaméthylène diisocyanate) et XDI (xylylène diisocyanate).

4. Composition d'enc re conductrice sensible à la pression selon la revendication 3, où ledit agent de durcissement comprend un agent bloquant qui contient un ou plusieurs composés d'hydrogène actif sélectionnés parmi méthyl éthyl cétone, ε-caprolactone, acétoacétate d'éthyle et phénol.

5. Composition d'encre conductrice sensible à la pression selon la revendication 1, où ledit agent de durcissement est un agent de durcissement d'isocyanate et le rapport NCO/OH de l'isocyanate dans ledit agent de durcissement à l'hydroxy dans ledit polyhydroxy éther est dans la gamme d'environ 0,2 à environ 2,0.

6. Composition d'encre conductrice sensible à la pression selon l'une quelconque des revendications 1 -5, où ladite charge conductrice est un noir de carbone conducteur ayant une structure développée avec une absorption d'huile DVP d'environ 200 à environ 480 ml/100 g.

7. Composition d'encre conductrice sensible à la pression selon l'une quelconque des revendications précédentes qui comprend une charge non conductrice qui est du bioxy de de silicium ultrafin ayant un diamètre de particules primaires de 7 à 40 nm.

8. Capteur sensible à la pression comprenant ladite composition d'encre conductrice sensible à la pression selon l'une quelconque des revendications 1-7.
